# EUROPÄISCHE PATENTSCHRIFT

(11) **EP 1 333 931 B1**
(45) Veröffentlichungstag und Bekanntmachung des Hinweises auf die Patenterteilung: **28.02.2007**
(21) Anmeldenummer: 01982271.7
(22) Anmeldetag: 11.09.2001
(51) Int. Cl.: B03B 9/06

(54) **ANLAGE UND VERFAHREN ZUR AUFBEREITUNG VON SHREDDER-RÜCKSTÄNDEN UND VERWENDUNG EINER ERZEUGTEN FLUSEN-FRAKTION**
INSTALLATION AND METHOD FOR PROCESSING SHREDDER RESIDUES AND USE OF A SHRED FRACTION SO PRODUCED
INSTALLATION ET PROCEDE DE TRAITEMENT DE RESIDUS DE DECHIQUETAGE ET UTILISATION D'UNE FRACTION DE DECHIQUETAGE PRODUITE

(30) Priorität: 27.10.2000 DE 10053491
(43) Veröffentlichungstag der Anmeldung: 13.08.2003
(60) Teilanmeldung: 06017837.3
(73) Patentinhaber: Volkswagen Aktiengesellschaft, 38436 Wolfsburg (DE)
(72) Erfinder: GOLDMANN, Daniel, 38640 Goslar (DE); DUNNEN, Bram den, 38106 Braunschweig (DE); KNUST, Michael, 38550 Isenbüttel (DE)
(86) Internationale Anmeldenummer: PCT/EP2001/010458
(87) Internationale Veröffentlichungsnummer: WO 2002/034399

(56) Entgegenhaltungen:
- EP-A- 0 979 677
- DE-A- 4 205 309
- DE-A- 19 911 010

## Beschreibung

Die Erfindung betrifft ein Verfahren zur Aufbereitung von Shredder-Rückständen metallhaltiger Abfälle, insbesondere von Fahrzeugkarossen, mit den im Oberbegriff des Anspruchs 1 genannten Merkmalen sowie eine Anlage mit den im Oberbegriff des Anspruchs 19 genannten Merkmalen, mit der die Aufbereitung der Shredder-Rückstände durchgeführt werden kann: Femer betrifft die Erfindung eine Verwendung einer staubund metallarmen Flusen-Fraktion nach Anspruch 28, die nach dem erfindungsgemäßen Verfahren separiert wurde.

Das Shreddem von Altfahrzeugen zum Materialaufschluss ist seit langem bekannt. Bei der Durchführung des Shredder-Prozesses haben sich Verfahrensführungen etabliert, bei denen das anfallende Stoffgemisch in verschiedene Fraktionen aufgeteilt wird. So wird zunächst mittels einer geeigneten Absaugvorrichtung eine sogenannte Shredder-Leichtfraktion (SLF) vom anfallenden Stoffgemisch abgetrennt. Die verbleibende Fraktion wird anschließend mit einem Permanent-Magnetscheider in eine ferromagnetische Fraktion (Shredder-Schrott (SS)) und eine nicht-ferromagnetische Fraktion (Shredder-Schwerfraktion (SSF)) aufgetrennt. Der Anteil der metallurgisch vollständig verwertbaren Shredder-Schrott-Fraktion liegt häufig bei zirka 50 bis 75 Gew.%. Die Shredder-Leichtfraktion wurde nach bisherigen Konzepten in der Regel als Abfall deponiert oder in Müllverbrennungsanlagen verbrannt. Sie ist dadurch gekennzeichnet, dass sie sowohl einen hohen Organik- als auch einen hohen Feinkornanteil enthält. Die schwere, nicht-flugfähige sowie nicht-ferromagnetische Fraktion also die Shredder-Schwerfraktion zeichnet sich durch einen hohen Anteil an Nichteisen-Metallen (NE-Metalle) aus. Zur Wiedergewinnung der verschiedenen NE-Metalle sind spezielle Aufbereitungsanlagen entwickelt worden, bei denen allerdings der verbleibende Rest aus organischen und anorganischen, nicht-metallischen Komponenten in der Regel als Abfall deponiert wird. Unter Shredder-Rückständen sollen nachfolgend alle Stoffströme aus dem Shredderprozess verstanden werden, die nicht direkt am Shredder als metallurgisch direkt verwertbare Produkte abgezogen (Shredder-Schrott) werden können.

Aus der DE 44 37 852 A1 ist ein Verfahren bekannt, bei dem die Shredder-Leichtfraktion, insbesondere zwecks Entfernen von "unerwünschten Bestandteilen", insbesondere Kupfer und Glas, aufbereitet wird. Dabei werden die Shredder-Rückstände in einem Zwangsmischer homogenisiert und mit einem fein- bis feinstkömigen, eine magnetisierbare Komponente enthaltenen Material vermischt sowie das resultierende Gemisch über einen Magnetscheider geführt. Es hat sich dabei gezeigt, dass die eine metallurgische Verwendung behindernden metallischen Bestandteile der Shredder-Leichtfraktion auf diese Weise abgetrennt werden können.

In der EP 0 863 114 A1 ist vorgesehen, einen dauerplastischen Bergbauversatzstoff zu schaffen, indem der Shredder-Leichtfraktion eine Bindemittelkomponente, ein Füllstoff und eine Salzlösung zugesetzt werden. Dadurch soll ein druckfester, dauerplastischer Körper geschaffen werden.

Aus der DE 197 42 214 C2 ist bekannt, die Shredder-Leichtfraktion weiter zu zerkleinern und einer thermischen Behandlung zu unterziehen. Während oder nach der Zerkleinerung sollen dabei metallische Bestandteile aussortiert werden und das verbleibende Stoffgemisch in einem Schmelzreaktor geschmolzen und durch Abkühlung zu einem "ungefährlichen" Feststoff umgewandelt werden.

Weiterhin offenbart die EP 0 922 749 A1 ein Verfahren zur Aufarbeitung der Shredder-Leichtfraktion, bei dem die Shredder-Leichtfraktion in einen Wirbelschichtvergaser und unter Einbringung von Kalziumkarbonat kalziniert wird.

In einem weiteren thermischen Verfahren sieht die DE 197 31 874 C1 vor, dass die Shredder-Leichtfraktion in einer weiteren Stufe erneut verpresst und dann zerkleinert, homogenisiert und im Wassergehalt reduziert wird, um in einer nachfolgenden Stufe thermisch verwertet zu werden.

In der EP 0 884 107 A2 ist vorgesehen, die Shredder-Leichtfraktion mittels Zerkleinerung, Klassierung und Sortierung in eine metallfreie Fraktion mit einer Zerkleinerungsstufe = 20 mm zu überführen. Die Aufbereitung der Shredder-Leichtfraktion soll zu einer thermisch verwertbaren Fraktion führen.

Weiterhin befasst sich die DE 197 55 629 A1 mit der Aufbereitung einer Shredder-Leichtfraktion in verschiedene Fraktionen, wie Shreddersand, Shreddergranulat, Shredderflusen und Metallgranulat.

Neben den aufgezeigten Verwertungsverfahren ist es bekannt, die Shredder-Leichtfraktion einer Vorbehandlung zu unterziehen, bei der ferromagnetische Restfraktionen aus Eisen, V2A-Stahl und Aluminium abgetrennt werden. Ähnliche Verfahren sind auch bei der Aufbereitung der Shredder-Schwerfraktion zum Einsatz gekommen. Darüber hinaus ist es bekannt, von dieser Fraktion Polyolefine abzutrennen.

Den aufgezeigten Verfahren ist gemeinsam, dass sie jeweils nur zur Verarbeitung der Shredder-Leichtfraktion oder der Shredder-Schwerfraktion ausgelegt sind. Eine gemeinsame Verarbeitung mit dem Ziel einer möglichst weitgehenden Auftrennung der Shredder-Rückstände zu zumindest teilweise verwertbaren Fraktionen, insbesondere einer rohstofflich oder energetisch verwertbaren Flusen-Fraktion, gemäß aktuellen rechtlichen Rahmenbedingungen, ist nicht vorgesehen. Vor dem Hintergrund steigender gesetzlicher Anforderungen (EU-Altautorichtlinie, EU-Verbrennungsrichtlinie und andere) und auch steigender Deponiekosten und Anforderungen an das zu deponierende Gut, ist eine erhöhte Verwertungsquote jedoch wünschenswert. So sieht die Altautoverordnung vom 1. April 1998 vor, dass ab dem Jahre 2015 über 95 Gew.% eines Altautos verwertet werden müssen. Verschärfte Anforderungen aus der im September 2000 verabschiedeten EU-Altautorichtlinie schreiben darüber hinaus vor, den Anteil werkstoff- und rohstofflich nutzbarer Stoffströme auf mindestens 85 Gew.% zu steigern. Eine Verwertung schließt demnach eine bloße energetische Nutzung, zum Beispiel in Müllverbrennungsanlagen, aus. Für eine mögliche rohstoffliche oder energetische Verwertung der anfallenden Flusen-Fraktion in Hochöfen, Zementwerken oder Klärschlamm-Verbrennungsanlagen muss insbesondere sichergestellt sein, dass störende Schwermetalle, die in anhaftenden Stäuben und verhakten Drähten und Litzen auftreten, weitestgehend entfernt werden.

Zusätzlich wird in der DE 199 11 010 A1 eine Anlage und ein Verfahren für die Verwertung von Shredderabfällen vorgeschlagen, deren Kern der Einsatz einer Rotorprallmühle ist, in welcher sowohl die Shredder-Schwerabfälle als auch die Shredder-Leichtabfälle zerkleinert werden. Um in einer einstufigen Hauptzerkleinerung einen ausreichenden Aufschluss aller Bestandteile zu erreichen, ist eine massive Krafteinwirkung auf die Partikel notwendig. - Hierdurch kann es zu einer eigentlich ungewollten Imprägnation oder einem Einpressen etwa von duktilen Kupferlitzen in Hartkunststoffpartikeln kommen. Passiert dies, lassen sich keine metallarmen Kunststoff-Fraktionen mehr gewinnen. Des Weiteren zielt das Verfahren im Wesentlichen nur darauf ab, dass Metallbestandteile abgetrennt werden.

Der Erfindung liegt daher die Aufgabe zugrunde, ein Verfahren und die dazu notwendige Anlage zur Verfügung zu stellen, mit denen Shredder-Rückstände verarbeitet werden können und in einem mechanischen Aufbereitungsprozess insbesondere mindestens eine qualitativ hochwertige und rohstofflich oder energetisch verwertbare Flusen-Fraktion erzeugbar ist.

Erfindungsgemäß wird diese Aufgabe durch ein Verfahren zur Aufbereitung von Shredder-Rückständen metallhaltiger Abfälle, insbesondere von Fahrzeugkarossen, mit den im Anspruch 1 genannten Merkmalen, eine Anlage zur Aufbereitung von Shredder-Rückständen mit den im Anspruch 19 genannten Merkmalen sowie die Verwendung einer nach dem erfindungsgemäßen Verfahren hergestellten Flusen-Fraktion mit den im Anspruch 28 genannten Merkmalen gelöst. Das Verfahren zeichnet sich insbesondere dadurch aus, dass
(a) während der Aufbereitung der Shredder-Leichtfraktion und der Shredder-Schwerfraktiön in Vorprozessen und der in den Vorprozessen entstehenden Stoffströme zumindest in Teilen in einem gemeinsamen Hauptprozess eine Rohflusen-Fraktion durch Abscheidung von wenigstens einer ferromagnetischen Fraktion, einer Nichteisen-Metall-haltigen Fraktion, einer Granulat-Fraktion und einer Sand-Fraktion erzeugt wird und
(b) die Rohflusen-Fraktion in einem Veredelungsprozess aufgetrennt wird.

Vorzugsweise erfolgt die Veredelung der Rohflusen-Fraktion durch Auftrennung mittels der aufeinanderfolgenden Prozessschritte Merallverkugelung, Entstaubung und Dichtetrennung in eine metallhaltige Staub-Fraktiön, eine Staub- und metallarme Flusen-Fraktion und eine Metall-Fraktion.

Die bereitgestellten Endprodukte können entweder direkt einer Verwertung zugeführt werden oder gegebenenfalls in weiteren Veredlungsschritten zu verwertbaren Produkten höherer Qualität weiter verarbeitet werden. Die Flusen-Fraktion kann dann insbesondere Einsatz in Hochöfen, Zementwerken oder Klärschlamm-Verbrennungsanlagen finden. Die für einen solchen Einsatz bereitzustellende Flusen-Fraktion weist vorzugsweise mindestens folgende weitere Charakteristika auf:
- einen Heizwert von > 20 MJ/kg
- einen Cl-Gehalt < 3,0 Gew.%
- einen Zn-Gehalt < 1,0 Gew.%
- einen Cu-Gehalt < 0,2 Gew.%
- einen Pb-Gehalt < 0,1 Gew.%.

Erst durch die weitestgehende Entfernung der störenden Metallpartikel und anhaftenden Stäube ist es möglich, Flusen-Fraktionen aus Shredder-Rückständen wirtschaftlich sinnvoll und in großem Umfang einer rohstofflichen oder energetischen Verwertung zugänglich zu machen. Chlorarm bzw. metallarm bedeutet, dass entweder die obigen Grenzen eingehalten sind und/oder in diesem Granulat gegenüber dem Rohgranulat mindestens 50 Gew.%, insbesondere 70 Gew.% weniger Chlor bzw. Metall enthalten ist.

Als Endprodukte werden damit mindestens eine hochwertige Flusen-Fraktion, eine ferromagnetische Fraktion, eine Nichteisen-Metall-haltige Fraktion, eine Granulat-Fraktion und eine Sand-Fraktion erzeugt.

Aus der Shredder-Leichtfraktion werden vorzugsweise in einer Vorbehandlung aufgeschlossene Fe-, V2A- und AI-Anteile abgetrennt. Vorzugsweise wird diese Shredder-Leichtfraktion
- in einem ersten Zerkleinerungsaggregat aufgeschlossen,
- anschließend mittels wenigstens eines Magnetscheiders in mindestens eine ferromagnetische Fraktion und eine nicht-ferromagnetische Fraktion aufgetrennt,
- in einem zweiten Zerkleinerungsaggregat die nicht-ferromagnetische Fraktion aufgeschlossen,
- von dieser Fraktion mittels wenigstens einer Klassiereinrichtung eine feinkörnige Sand-Fraktion abgetrennt und
- die verbleibende Fraktion in wenigstens einer Dichtetrennungseinrichtung in eine Rohflusen-Fraktion und eine grobkörnige Schwergut-Fraktion aufgetrennt.

Durch die aufgezeigte Vorgehensweise mit dem stufenweisen Aufschluss der Shredder-Leichtfraktion und den zwischengeschalteten Verfahrensschritten zur Trennung der besonders abrasiv wirkenden ferromagnetischen Bestandteile, können die Betriebskosten insbesondere beim zweiten Zerkleinerungsaggregat geringgehalten werden. Eine weitere bevorzugte Ausführung sieht vor, dass im Vorprozess mittels einer Absaugeinrichtung zusätzlich eine Schaumstoff-Fraktion - im Wesentlichen aus Polyurethan bestehend abgetrennt wird.

Weiterhin wird die Shredder-Schwerfraktion im Vorprozess vorzugsweise durch wenigstens einen Metallabscheider und wenigstens eine Klassiereinrichtung in wenigstens eine angereicherte, Nichteisen-Metall-haltige Fraktion, eine Schwergut-Fraktion und eine feinkörnige, metallarme Sand-Fraktion getrennt. Zusätzlich ist es denkbar, dass von der Schwergut-Fraktion in wenigstens einer Dichtetrennungseinrichtung eine hochdichte Restfraktion abgetrennt wird. Die Auftrennung der Shredder-Schwerfraktion in verschiedene Stoffströme wird unter dem Gesichtspunkt einer möglichen gemeinschaftlichen Verarbeitung mit den zuvor bei den im Vorprozess der Verarbeitung der Shredder-Leichtfraktion entstehenden Stoffströmen vorgenommen.

Im Hauptprozess werden die Stoffströme aus den Vorprozessen vorzugsweise derart zusammengeführt, dass
- die Sand-Fraktionen zu einer gemeinsamen Sand-Fraktion zusammengefasst werden und
- die Schwergut-Fraktionen zu einer gemeinsamen Schwergut-Fraktion zusammengefasst, mittels eines Zerkleinerungsaggregates aufgeschlossen und über eine Dichtetrennungseinrichtung in die Granulat-Fraktion und in eine angereicherte, Nichteisen-Metall-haltige Fraktion aufgetrennt werden.

In diesem Prozessteilschritt fallen demnach die gewünschten Endprodukte Sand, Granulat und die Nichteisen-Metall-haltige. Fraktion an. Die Nichteisen-Metall-haltigen Fraktionen können dann vorzugsweise in einem gemeinsamen Aufbereitungsschritt mittels geeigneter Verfahrensschritte, zum Beispiel einer Sandflotation und einer optischen Sortierung, zur Abtrennung von Leichtmetall-, Buntmetall- und sonstigen Metall-Fraktionen unterzogen werden. Die bei der Abtrennung anfallenden, nicht-metallischen Restfraktionen können je nach Menge und Zusammensetzung an geeigneten Stellen in den Hauptprozess und/oder die Vorprozesse wieder eingespeist werden.

Die durch die aufgezeigten Aufbereitungsprozesse unter anderem bereitgestellte Rohflusen-Fraktion ist bereits ein homogenes Produkt, dass heißt, bestimmte flugfähige Bestandteile (PU), Metalle, Granulat und Sand sind bereits abgetrennt worden. Die Rohflusen-Fraktion kann aber erst durch die Veredelung von noch vorhandenen Metallpartikeln und anhaftenden Metallstäuben befreit werden. Vorzugsweise erfolgt dabei eine Verkugelung von Metalldrähten und -Litzen. Nach der Metallverkugelung erfolgt eine Entstaubung. Von der entstaubten Flusen-Fraktion werden in einer Dichtetrennungseinrichtung die verkugelten Metalle abgetrennt.

Weitere bevorzugte Ausgestaltungen des Verfahrens ergeben sich aus den übrigen verfahrensabhängigen Unteransprüchen.

Bevorzugte Ausführungsformen der erfindungsgemäßen Anlage ergeben sich aus den abhängigen Ansprüchen 20 bis 27. Hinsichtlich der Vorteile der erfindungsgemäßen Anlage sei insbesondere auf die obigen Ausführungen, das erfindungsgemäße Verfahren betreffend, verwiesen.

Die Erfindung wird nachfolgend in einem Ausführungsbeispiel anhand der zugehörigen Zeichnungen näher erläutert. Es zeigen:
Figur 1 eine Übersicht über die im Prozess der Aufbereitung der Shredder-Rückstände zu bestimmten Zeitpunkten entstehenden Endprodukte in einem Fließdiagramm und
Figur 2ein schematisches Fließdiagramm für die Prozessführung in den Vorprozessen und im Hauptprozess der Aufbereitung.

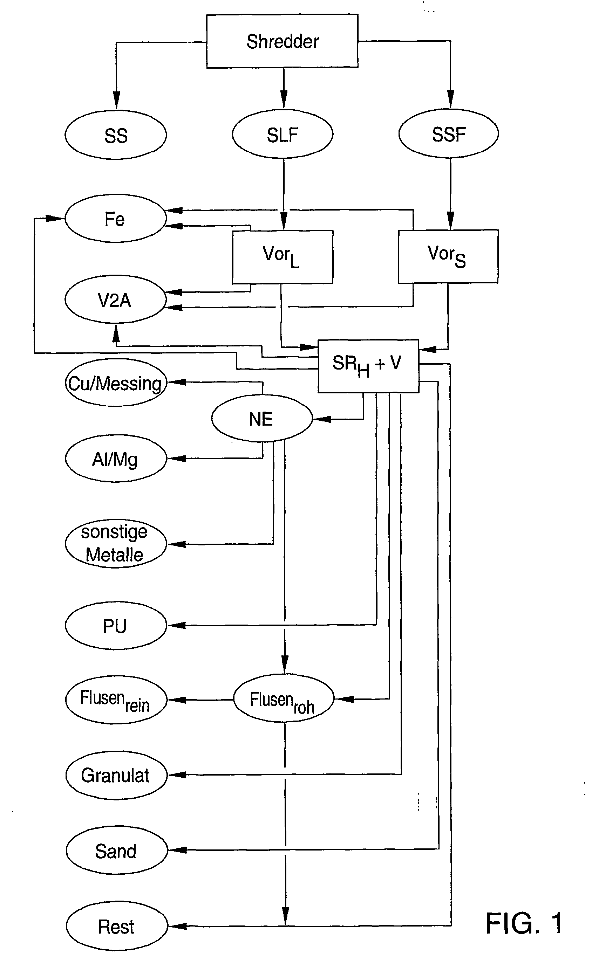

Die Figur 1 zeigt in einem Fließdiagramm, zu welchen Zeitpunkten Endprodukte nach dem erfindungsgemäßen Verfahren während der Aufbereitung der Shredder-Rückstände anfallen. Zunächst werden in einem an sich bekannten vorgeschalteten Shredderprozess in einem Shredder metallhaltige Abfälle, insbesondere von Fahrzeugkarossen, durch einen Zerkleinerungsprozess aufgeschlossen. Im Nachgang erfolgt eine Abtrennung einer flugfähigen Leichtfraktion durch eine Absaugvorrichtung (Shredder-Leichtfraktion SLF). Der nach der Absaugung verbleibende schwere, nicht-flugfähige Stoffstrom wird auf einem Permanent-Magnetscheider in eine ferromagnetische und eine nicht-ferromagnetische Fraktion getrennt. Die ferromagnetische Fraktion wird als Shredder-Schrott SS bezeichnet und stellt das primäre, direkt in der Metallurgie einsetzbare Produkt des Shredders dar. Die schwere, nicht-flugfähige sowie nicht-ferromagnetische Fraktion wird als Shredder-Schwerfraktion SSF bezeichnet. In einem weiteren, hier nicht dargestellten Vorbehandlungsschritt können von der Shredder-Leichtfraktion SLF mittels eines Magnetscheiders noch vorhandene ferromagnetische Bestandteile abgetrennt werden. Der dann verbleibende Stoffstrom der Shredder-Leichtfraktion SLF sowie die Shredder-Schwerfraktion SSF werden nun gemeinschaftlich als Shredder-Rückstände in die gewünschten Endprodukte aufgetrennt.

Die Prozessführung sieht dazu einen Vorprozess VorL für die Shredder-Leichtfraktion SLF, einen Vorprozess VorS für die Shredder-Schwerfraktion SSF, einen gemeinsamen Hauptprozess SRH und einen Veredelungsprozess V zur abschließenden Aufarbeitung zumindest eines Teiles der in den Vorprozessen VorL, VorS entstehenden primären Stoffströme vor. Als Endprodukte gemäß dem Ausführungsbeispiel entstehen Fraktionen, die überwiegend und mit möglichst hoher Reinheit aus Eisen Fe, Stahl V2A, Sand, Granulat, staub- und metallarme Flusen Flusenrein, Schaumstoff PU und einem zu beseitigenden Rest bestehen. Weiterhin kann eine Nichteisen-Metall-haltige Fraktion NE abgetrennt werden, die durch entsprechende Prozessführung wiederum eine Aufteilung in Fraktionen mit Buntmetallen Cu/Messing, Leichtmetallen Al/Mg und sonstige Metalle ermöglicht. Die entstehenden Endprodukte können bis auf die Restfraktion einer metallurgischen, werkstofflichen, rohstofflichen und energetischen Verwertung zugeführt werden. Der Veredelungsprozess V kann insbesondere unter dem Gesichtspunkt der Bereitstellung einer staub- und metallarmen Flusen-Fraktion Flusenrein ausgestaltet werden, die rohstofflich oder energetisch in Hochöfen, Zementwerken oder ähnlichen Anlagen verwertet werden kann. Dazu muss die Flusen-Fraktion (Flusenrein) mindestens folgende Charakteristika aufweisen:
- einen Heizwert von > 20 MJ/kg
- einen Cl-Gehalt < 3,0 Gew.%
- einen Zn-Gehalt < 1,0 Gew.%
- einen Cu-Gehalt < 0,2 Gew.%
- einen Pb-Gehalt < 0,1 Gew.%.

Die nachfolgend geschilderten Prozessschritte ermöglichen insbesondere die Separation einer Flusen-Fraktion Flusenrein aus den heterogenen Shredder-Rückständen, welche der genannten Spezifikation entspricht.

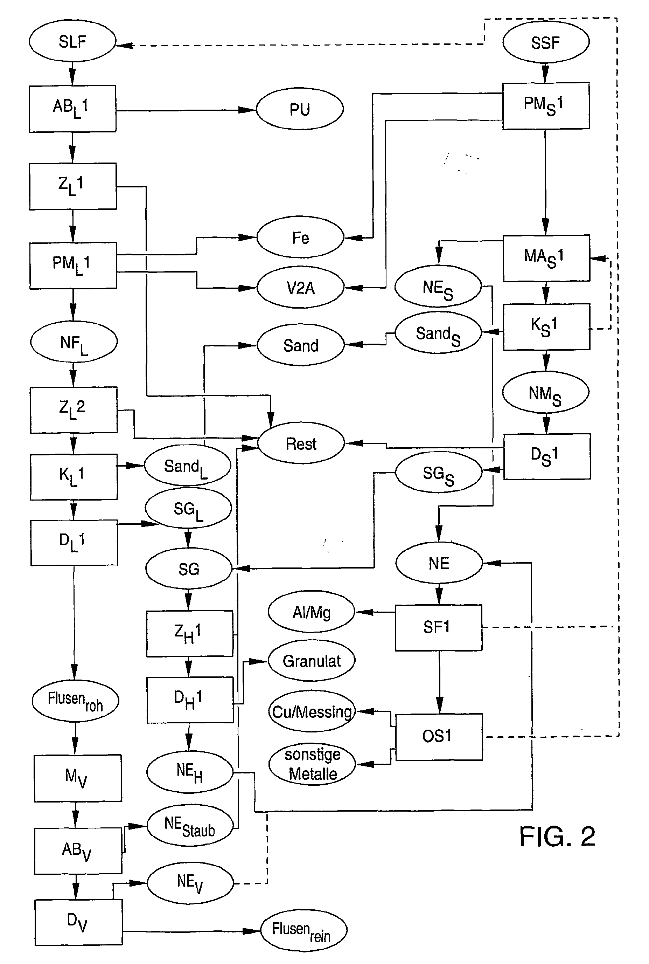

In der Figur 2 sind schematisch wesentliche Komponenten der Anlage zur Aufbereitung der Shredder-Rückstände und die jeweils während der Verfahrensführung an diesen Komponenten anfallenden Zwischen- oder Endprodukte in einem Fließdiagramm dargestellt. Der Übersicht wegen sind die während des Verfahrens erzeugten Endprodukte mittig angeordnet. Der Vorprozess VorL zur Aufbereitung der Shredder-Leichtfraktion SLF ist schematisch im linken oberen Teil, der Vorprozess VorS zur Aufbereitung der Shredder-Schwerfraktion SSF im rechten oberen Teil, der Hauptprozess SRH mittig im unteren Teil und der Veredelungsprozess V im linken unteren Teil der Zeichnung dargestellt.

Die Shredder-Schwerfraktion SSF wird zunächst einer zweistufigen Fe- und V2A-Separation mittels eines Permanent-Magnetscheiders PMS1 unterzogen. Nach der Fe- und V2A-Abscheidung erfolgt eine Klassierung des Reststromes und eine Abscheidung Nichteisen-Metall-haltiger Fraktionen NES. Dies kann beispielsweise derart erfolgen, dass zunächst eine Klassierung in verschiedene Fraktionen, beispielsweise größer und kleiner 20 mm, erfolgt und diese Fraktion jeweils separat dem Metallabscheider MAS1 zugeführt werden. Denkbar sind selbstverständlich noch zusätzliche Klassierungsstufen. Im Vordergrund steht dabei eine möglichst saubere stoffliche Trennung in die Nichteisen-Metall-haltigen Fraktionen NES und die verbleibenden metallarmen Fraktionen NMS. Die Klassiereinrichtung KS1 sieht ferner vor, dass metallarme Fraktionen NMS mit einem Korndurchmesser vorzugsweise < 6 mm als eine Sand-Fraktion SandS abgetrennt werden.

Die verbleibende grobkörnige metallarme Fraktion NMS wird anschließend mit einer Dichtetrennungseinrichtung DS1 in eine Schwergut-Fraktion SGS sowie eine hochdichte Restfraktion Rest aufgetrennt. Damit soll verhindert werden, dass bei der Weiterbehandlung der Schwergut-Fraktion SGS in nachgeschalteten Zerkleinerungsaggregaten noch hochabrasive und scharfkantige Materialien, wie zum Beispiel Edelstahlkugeln, im Mahlraum vorhanden sind. Zusätzlich kann an dieser Stelle nochmals ein Metallabscheider installiert werden, um letzte verschleißfördemde, massive Metallverunreinigungen abzutrennen. Zusammenfassend liefert der Vorprozess VorS demnach eine Eisen-Fraktion Fe, eine Stahl-Fraktion V2A, eine Nichteisen-Metallhaltige Fraktion NES, eine Sand-Fraktion SandS und eine Schwergut-Fraktion SGS.

Im Vorprozess VorL wird ausgehend von der Shredder-Leichtfraktion SLF zunächst eine Schaumstoff-Fraktion PU überwiegend aus dem leicht-flugfähigen Polyurethan bestehend in der Absaugeinrichtung ABL1 abgetrennt. Die abgetrennten Schaumstoffstücke werden pneumatisch in einen Presscontainer gefördert und dort automatisch verdichtet. Diese Fraktion kann direkt verwertet oder gegebenenfalls einer weiteren, hier nicht weiter ausgeführten Veredelungsstufe zugeführt werden.

Die verbleibende Fraktion wird nun in einem ersten Zerkleinerungsaggregat ZL1 aufgeschlossen, und zwar derart, dass ein Austrag des Aggregats ZL1 Partikel mit einem Durchmesser < 50 mm enthält. Um eine Beanspruchung des Zerkleinerungsaggregats ZL1 möglichst geringzuhalten, kann vorgesehen sein, dass eine hier nicht dargestellte Klassiereinrichtung zur Separation und Zuführung einer Fraktion mit einem Durchmesser von > 50 mm vorgeschaltet wird. Von der zerkleinerten Fraktion wird mittels eines Permanent-Magnetscheiders PML1 eine Eisenfraktion Fe und eine Stahlfraktion V2A abgetrennt. Die verbleibende nicht-ferromagnetische Fraktion NFL wird nun einem zweiten Zerkleinerungsaggregat ZL2 zugeführt, in dem ein weiterer Aufschluss des Materials erfolgt. Ein Austrag des. Zerkleinerungsaggregates ZL2 wird dabei mit < 10 mm ausgelegt. Auch hier kann über eine nicht dargestellte Klassiereinrichtung die Beschickung des Zerkleinerungsaggregates ZL2 auf eine Fraktion mit einem Durchmesser > 10 mm beschränkt werden.

Von der nun gut aufgeschlossenen nicht-ferromagnetischen Fraktion NFL wird in einer weiteren Klassiereinrichtung KL1 eine feinkörnige Sand-Fraktion SandL abgetrennt. Eine Korngröße der Sand-Fraktion SandL wird vorzugsweise auf < 4 mm festgelegt. Die verbleibende Fraktion wird einer Windsichtung und Dichtetrennung in einer entsprechenden Einrichtung DL1 unterzogen. In der Einrichtung DL1 wird eine leichte Fraktion aus Flusen (Rohflusen-Fraktion Flusenroh) mittels Querstromsichter über eine Schwergutklappe geblasen. Aufgrund der vorherigen Förderung auf einem Vibrationsförderer hat sich das schwerere Material bereits nach unten abgesetzt, so dass die unterliegende Schwerfraktion zwangsläufig nach unten in einen Schwergutaustrag fällt (Schwergut-Fraktion SGL). Zusammengefasst können in dem Vorprozess VorL die End- und Zwischenprodukte Schaumstoffstücke PU, Eisen Fe, Stahl V2A, SandL, Flusen Flusenroh und Schwergut SGL bereitgestellt werden. Die während der Bearbeitung in den Zerkleinerungsaggregaten ZL1 und ZL2 anfallenden schwermetall- und organikhaltigen Stäube und Schlämme werden der Restfraktion Rest zugeführt.

Im Veredelungsprozess V wird die Rohflusen-Fraktion Flusenroh soweit gereinigt, dass sie einer rohstofflichen oder energetischen Verwertung zugänglich ist. Die dem vorliegenden Veredelungsprozess V zugrunde liegende Anforderung ist die Herstellung eines schwermetallabgereicherten Materials für den Einsatz in Klärschlamm-Verbrennungsanlagen, Zementwerken oder in Hochöfen. Eine Aufarbeitung erfolgt in Hinsicht auf die in solchen Prozessen geltenden Anforderungen, wie Förder- und Einblasfähigkeit sowie Halogengehalt. Insbesondere aber soll der Gehalt an Kupfer, Zink und Blei abgesenkt werden.

Zunächst wird dazu die Rohflusen-Fraktion Flusenroh direkt aus dem Querstromsichter des Hauptprozesses SRH mechanisch über ein Förderband in eine Pralltellermühle MV gefördert. In der Mühle erfolgt eine Verkugelung der von Kabelummantelungen freigelegten, jedoch verhakten Kupferlitzen sowie anderer Metalldrähte und ein Abreiben von Stäuben, die sich im Fasergeflecht festgesetzt haben. Der organische Faseranteil wird dabei nicht zerkleinert. Das so behandelte Gut wird anschließend mit einer Absaugeinrichtung ABV entnommen. In die Absaugeinrichtung ABV ist eine Staubabtrennung integriert, so dass der abgeriebene, schwermetallangereicherte Staubanteil vom Rest des Stoffstromes separiert und über Filteranlagen in einer Staub-Fraktion NEStaub konzentriert werden kann.

Das entstaubte Gut wird pneumatisch auf Luft-Setz-Tische gefördert (Dichtetrennungseinrichtung DV). Hier erfolgt die Abtrennung der verkugelten Kupferlitzen und sonstigen Metalldrähte. Die kupferreiche NE-Metall-Fraktion NEV dieser Veredelungsstufe kann mit kupferreichen Fraktionen aus dem Hauptprozess SRH vereint werden oder alternativ in die NE-Metallaufbereitung übergeleitet werden. Die verbleibende Leichtfraktion bildet die Flusenfraktion Flusenrein, die pneumatisch in einen Presscontainer gesaugt wird. Für einen Einsatz im Hochofen ist nachgeschaltet eine Brikettierung oder Pelletierung möglich.

Im Hauptprozess SRH werden zunächst die Sand-Fraktionen SandL, SandS zu einer gemeinsamen Sand-Fraktion Sand zusammengefasst. Gegebenenfalls kann diese Fraktion einer weiteren, hier nicht dargestellten Veredelungsstufe zugeführt werden.

Auch die Schwergut-Fraktionen SGL und SGS werden zu einer gemeinsamen Schwergut-Fraktion SG zusammengefasst. Diese wird nachfolgend in einem weiteren Zerkleinerungsaggregat ZH1 erneut aufgeschlossen. Ein Austrag der Zerkleinerungsaggregate ZH1 wird mit < 8 mm ausgelegt. Das Zerkleinerungsaggregat ZH1 ist üblicherweise als Schneidmühle ausgebildet, damit an dieser Stelle ein optimaler Materialaufschluss erreicht wird. Nach der Zerkleinerung erfolgt eine Dichtetrennung auf Luft-Setz-Tischen (Dichtetrennungseinrichtung DH1). Die abgetrennte Leichtfraktion besteht überwiegend aus Kunststoff in granulierter Form. Das Granulat kann gegebenenfalls in einem eigenständigen Veredelungsprozess weiter aufgearbeitet werden. Die verbleibende Schwerfraktion NEH besteht größtenteils aus Nicht-Eisenmetallen, und zwar überwiegend aus Kupfer-Litzen. Die Fraktion NEH kann daher bereits an dieser Stelle dem Prozess entzogen werden, aber auch mit der Nichteisen-Metall-haltigen Fraktion NES zu einer gemeinsamen Fraktion NE zusammengeführt werden und gemeinsam aufbereitet werden.

Die Aufbereitung der Nichteisen-Metall-haltigen Fraktion NE kann im Wesentlichen mittels einer Sandflotationsanlage SF1 und eines optischen Sortierers OS1 erfolgen. Mit einer Sandflotation ist es möglich, eine Leichtmetall-Fraktion vorwiegend aus Aluminium und Magnesium von einer Schwermetall-Fraktion trockenmechanisch zu trennen. Anzumerken ist, dass der hier verwendete Sand als Separationsmedium nichts mit der abgetrennten Fraktion Sand aus den Shredder-Rückständen zu tun hat. Die Schwermetalle sinken in das Sandbett, während die Leichtmetalle auf dem Sandbett aufschwimmen. Über eine Trennscheide werden ein leichtmetallhaltiger Oberstrom und der mit den Schwermetallen angereicherte Unterstrom getrennt. In einem zur Sandflotation gehörenden Prozessschritt werden die Metallkonzentrate wieder vom Trennmedium Sand getrennt. Die abgetrennte Aluminium- und Magnesium-Fraktion Al/Mg kann gegebenenfalls noch weiter aufgetrennt werden.

Die abgetrennte Schwerfraktion (insbesondere Zink Zn, Kupfer Cu, Messing, Blei Pb sowie eventuell V4A-Stahl) wird durch den optischen Sortierer OS1 in Buntmetalle Kupfer/Messing und sonstige Metalle aufgetrennt. Eventuell hier anfallende nichtmetallische Reste können je nach Menge und Zusammensetzung an geeigneter Stelle, wie beispielsweise hier in den Vorprozess VorL, eingespeist werden. Zusammengefasst werden im Hauptprozess SRH mit anschließender Nichteisen-Metall-Aufbereitung eine Al/Mg-Fraktion, eine Cu/Messing-Fraktion, eine Fraktion mit sonstigen Metallen, eine Sand-Fraktion Sand und eine Granulat-Fraktion Granulat bereitgestellt.

### Bezugszeichenliste

- AB_{L}1, AB_{V}: Absaugeinrichtungen
- Al/Mg: Leichtmetall-Fraktion
- Cu/Messing: Buntmetall-Fraktion
- D_{H}1, D_{L}1, D_{S}1, D_{V}: Dichtetrennungseinrichtungen
- Fe: Eisen-Fraktion
- Flusenᵣₑᵢₙ: chlor- und metallarme Granulat-Fraktion
- Flusenᵣₒₕ: Flusen-Fraktion
- Granulat: Granulat-Fraktion
- K_{L}1, K_{S}1: Klassiereinrichtungen
- MA_{S}1: Metallabscheider / Allmetallseparator
- Mv: Pralltellermühle
- NE, NE_{H}, NE_{L}, NE_{S}, NE_{Stub}, NE_{V}: Nichteisen-Metall-haltige Fraktionen
- NF_{L}: nicht-ferromagnetische Fraktion
- NM_{S}: metallarme Fraktion
- OS1: optischer Sortierer
- PM_{L}1, PM_{S}1: Permanent-Magnetscheider
- PU: Schaumstoff-Fraktion
- Rest: Restfraktion
- Sand, Sand_{L}, Sand_{S}: Sand-Fraktionen
- SF1: Sandflotationsanlage
- SG, SG_{L}, SG_{S}: Schwergut-Fraktionen
- SLF: Shredder-Leichtfraktion
- Sonstige Metalle: Fraktion mit sonstigen Metallen
- SR_{H}: Hauptprozess
- SS: Shredder-Schrott
- SSF: Shredder-Schwerfraktion
- V: Veredelungsprozess für die Rohflusen-Fraktion
- V2A: Stahl-Fraktion
- Vor_{L}: Vorprozess für die Shredder-Leichtfraktion
- Vor_{S}: Vorprozess für die Shredder-Schwerfraktion
- Z_{L}1, Z_{L}2, Z_{H}1: Zerkleinerungsaggregate

## Patentansprüche

1. Verfahren zur Aufbereitung von Shredder-Rückständen metallhaltiger Abfälle, insbesondere von Fahrzeugkarossen insbesondere Altkarossen und/oder Unfallfahrzeuge, bei dem die Shredder-Rückstande in eine Shredder-Leichtfraktion (SLF) und eine nicht-ferromagnetische Fraktion (Shredder-Schwerfraktion (SSF)) aufgetrennt werden, **dadurch gekennzeichnet, dass**
(a) während der Aufbereitung der Shredder-Leichtfraktion (SLF) und der Shredder-Schwerfraktion (SSF) in Vorprozessen (Vor_{L}, Vor_{S}) und der in den Vorprozessen (Vor_{L}, Vor_{S}) entstehenden Stoffströme zumindest in Teilen in einem gemeinsamen Hauptprozess (SR_{H}) eine Rohflusen-Fraktion (Flusenᵣₒₕ) durch Abscheidung von wenigstens einer ferromagnetische Fraktion (Fe,V2A), einer Nichteisen-Metall-haltige Fraktion (NE), einer Granulat-Fraktion (Granulat) und einer Sand-Fraktion (Sand) erzeugt wird und
(b) die Rohflusen-Fraktion (Flusenᵣₒₕ) in einem Veredelungsprozess (V) aufgetrennt wird.

2. Verfahren nach Anspruch 1, **dadurch gekennzeichnet, dass** die Rohflusen-Fraktion (Flusenᵣₒₕ) in mindestens eine, insbesondere mindestens zwei der Fraktionen metallhaltige Staub-Fraktion (NE_{Staub}), metallarme Flusen-Fraktion (Flusenᵣₑᵢₙ), Metall-Fraktion (NE_{V}) aufgetrennt wird.

3. Verfahren nach Anspruch 1 oder 2, **dadurch gekennzeichnet, dass** die Rohflusen-Fraktion (Flusenᵣₒₕ) in mindestens einem, insbesondere in mindestens zwei der Prozessschritte Metallverkugelung, Entstaubung und/oder Dichtetrennung aufgetrennt wird, wobei diese Prozessschritte vorteilhaft in der angegebenen Reihenfolge durchgeführt werden.

4. Verfahren nach einem der vorherstehenden Ansprüche, **dadurch gekennzeichnet, dass** die Rohflusen-Fraktion (Flusenᵣₒₕ) zumindest aus der Shredder-Leichtfraktion (SLF) und insbesondere nur aus dieser abgetrennt wird.

5. Verfahren nach einem der vorhergehenden Ansprüche, **dadurch gekennzeichnet, dass** die Shredder-Leichtfraktion (SLF) einer weiteren Vorbehandlung mittels eines Magnetscheiders zur Abtrennung von ferromagnetischen Restfraktionen unterworfen wird.

6. Verfahren nach einem der vorhergehenden Ansprüche, **dadurch gekennzeichnet, dass** im Vorprozess (Vor_{L}) ausgehend von der Shredder-Leichtfraktion (SLF) durch mindestens einen, insbesondere mindestens zwei der Prozessschritte, vorteilhaft in der angegebenen Reihenfolge, Zerkleinerung, Metallabscheidung, Klassierung, Dichtetrennung mindestens eine, vorteilhaft mindestens zwei und insbesondere mindestens drei der Fraktionen eisenhaltige bzw. ferromagnetische Fraktionen (Fe,V2A), feinkörnige Sand-Fraktion (Sand_{L}), Rohflusen-Fraktion (Flusenᵣₒₕ) und/oder (grob)körnige Schwergut-Fraktion (SG_{L}) abgetrennt wird, wobei vorzugsweise zumindest die letztgenannte Fraktion erhalten wird.

7. Verfahren nach Anspruch 6, **dadurch gekennzeichnet, dass** von der Shredder-Leichtfraktion (SLF) im Vorprozess (Vor_{L}) insbesondere mittels einer Absaugeinrichtung (AB_{L}) zusätzlich eine Schaumstoff-Fraktion (PU) abgetrennt wird.

8. Verfahren nach Anspruch 6 oder 7, **dadurch gekennzeichnet, dass** insbesondere durch die Zerkleinerung und/oder Klassierung mindestens 60 Gew:%, insbesondere mindestens 80 Gew.% der Schwergut-Fraktion (SG_{L}) mit einem Durchmesser von 4 bis 10 mm erhalten werden.

9. Verfahren nach einem der vorhergehenden Ansprüche, **dadurch gekennzeichnet, dass** von der Shredder-Schwerfraktion (SSF) im Vorprozess (Vor_{S}) durch mindestens einen der Prozesse Metallabscheidung, Klassierung und/oder Dichtetrennung mindestens eine Nichteisen-Metall-haltige Fraktion (NE_{S}), feinkörnige, metallarme Sand-Fraktion (Sand_{S}), hochdichte Restfraktion (Rest) und/oder Schwergut-Fraktion (SG_{S}) abgetrennt wird, wobei vorzugsweise mindestens zwei, insbesondere mindestens drei dieser Fraktionen und besonders vorteilhaft zumindest die letztgenannte Fraktion erhalten wird.

10. Verfahren nach Anspruch 9, **dadurch gekennzeichnet, dass** durch die Klassierung mindestens 60 Gew.%, insbesondere mindestens 80 Gew.% der Schwergut-Fraktion (SG_{S}) mit einem Durchmesser von > 6 mm erhalten werden.

11. Verfahren nach einem der Ansprüche 6 bis 10, **dadurch gekennzeichnet, dass** im Hauptprozess (SR_{H}) die Schwergut-Fraktion/en (SG_{L}, SG_{S}) mittels eines Zerkleinerungsaggregates (Z_{H}1) aufgeschlossen und über eine Dichtetrennungseinrichtung (D_{H}1) in die Granulat-Fraktion (Granulat_{H}) und/oder in eine angereicherte, Nichteisen-Metall-haltige Fraktion (NE_{H}) aufgetrennt wird/werden.

12. Verfahren nach Anspruch 11, **dadurch gekennzeichnet, dass** ein Austrag des Zerkleinerungsaggregates (Z_{H}1) mit < 8 mm vorgegeben wird.

13. Verfahren nach einem der vorhergenannten Ansprüchen, **dadurch gekennzeichnet, dass** die Metall-Fraktionen (NE_{H}, NE_{S}) zur gemeinsamen Metall-Fraktion (NE) zusammengefasst werden.

14. Verfahren nach einem der vorhergenannten Ansprüche, **dadurch gekennzeichnet, dass** eine Verkugelung von Metalldrähten und -Litzen in der Rohflusen-Fraktion erfolgt.

15. Verfahren nach einem der vorhergenannten Ansprüche, **dadurch gekennzeichnet, dass** eine Abtrennung schwermetallhaltiger Stäube erfolgt.

16. Verfahren nach einem der vorhergenannten Ansprüche, **dadurch gekennzeichnet, dass** eine Abtrennung verkugelter Metalldrähte und -Litzen erfolgt.

17. Verfahren nach einem der vorhergenannten Ansprüche, **dadurch gekennzeichnet, dass** die bei der Abtrennung im Veredelungsprozess (V) anfallende, Nichteisen-Metall-haltige Fraktion (NE_{V}) je nach Menge und Zusammensetzung in einen Aufbereitungsprozess der Nichteisen-Metall-haltigen Fraktion (NE) integriert wird.

18. Verfahren nach einem der vorhergenannten Ansprüche, **dadurch gekennzeichnet, dass** eine Pelletierung oder Brikettierung der Flusen-Fraktion (Flusenᵣₑᵢₙ) erfolgt.

19. Anlage zur Aufbereitung von Shredder-Rückständen metallhaltiger Abfälle, insbesondere von Fahrzeugkarossen, bestehend aus einer Shredder-Leichtfraktion (SLF) und einer nicht-ferromagnetischen Fraktion (Shredder-Schwerfraktion (SSF)), **dadurch gekennzeichnet, dass** Mittel vorhanden sind, mit denen
(a) während der Aufbereitung der Shredder-Leichtfraktion (SLF) und der Shredder-Schwerfraktion (SSF) in Vorprozessen (Vor_{L}, Vor_{S}) und der in den Vorprozessen (Vor_{L}, Vor_{S}) entstehenden Stoffströme zumindest in Teilen in einem gemeinsamen Hauptprozess (SR_{H}) eine Rohflusen-Fraktion (Flusenᵣₒₕ) durch Abscheidung von wenigstens einer ferromagnetischen Fraktion (Fe/V2A), einer Nichteisen-Metall-haltigen Fraktion (NE), einer Granulat-Fraktion (Granulat) und einer Sand-Fraktion (Sand) erzeugt wird und
(b) die Rohflusen-Fraktion (Flusenᵣₒₕ) in einem Veredelungsprozess (V) aufgetrennt wird.

20. Anlage nach Anspruch 19 **dadurch gekennzeichnet, dass** Mittel vorhanden sind, mit denen die Rohflusen-Fraktion (Flusenᵣₒₕ) in dem Veredelungsprozess (V) durch die aufeinanderfolgenden Prozessschritte Metallverkugelung, Entstaubung und Dichtetrennung in eine metallhaltige Staub-Fraktion (NE_{Staub}), eine metallarme Flusen-Fraktion (Flusenᵣₑᵢₙ) und die Metall-Fraktion (NE_{V}), aufgetrennt wird.

21. Anlage nach Anspruch 19 oder 20, **dadurch gekennzeichnet, dass** ein Magnetscheider zur Abtrennung von ferromagnetischen Restfraktionen von der Shredder-Leichtfraktion (SLF) vorhanden ist.

22. Anlage nach einem der Ansprüche 19 bis 21, **dadurch gekennzeichnet, dass** zur Aufarbeitung der vorbehandelten Shredder-Leichtfraktion (SLF) im Vorprozess (Vor_{L}) aufeinander folgend
- ein erstes Zerkleinerungsaggregat (Z_{L}1) zum Aufschluss der Shredder-Leichtfraktion (SLF),
- wenigstens ein Magnetscheider (PM_{L}1) zur Abtrennung mindestens einer ferromagnetischen Fraktion (Fe, V2A) von einer nicht-ferromagnetische Fraktion (NF_{L}),
- ein zweites Zerkleinerungsaggregat (Z_{L}2) zum Aufschluss der nicht-ferromagnetischen Fraktion (NF_{L}),
- wenigstens eine Klassiereinrichtung (K_{L}1) zur Abtrennung einer feinkörnigen Sand-Fraktion (Sand_{L}) und
- wenigstens eine Dichtetrennungseinrichtung (D_{L}1) zur Auftrennung der verbleibenden Fraktion in die Rohflusen-Fraktion (Flusenᵣₒₕ) und eine grobkörnige Schwergut-Fraktion (SG_{L}) vorgesehen sind.

23. Anlage nach Anspruch 22, **dadurch gekennzeichnet, dass** zusätzlich eine Absaugeinrichtung (AB_{L}) zur Abtrennung einer Schaumstoff-Fraktion (PU) vorgesehen ist.

24. Anlage nach einem der Ansprüche 19 bis 23, **dadurch gekennzeichnet, dass** zur Aufarbeitung der Shredder-Schwerfraktion (SSF) im Vorprozess (Vor_{S}) aufeinander folgend ein Metallabscheider (MA_{S}1) und wenigstens eine Klassiereinrichtung (K_{S}1) zur Abtrennung wenigstens einer angereicherten, Nichteisen-Metall-haltigen Fraktion (NE_{S}), einer Schwergut-Fraktion (SG_{S}) und einer feinkörnigen, metallarmen Sand-Fraktion (Sand_{S}) vorgesehen sind.

25. Anlage nach einem der Ansprüche 19 bis 24, **dadurch gekennzeichnet, dass** zur Aufarbeitung der Stoffströme aus den Vorprozessen (Vor_{L}, Vor_{S}) im Hauptprozess (SR_{H})
- Mittel zur Zusammenfassung der Schwergut-Fraktionen (SG_{L}, SG_{S}) zu einer gemeinsamen Schwergut-Fraktion (SG),
- ein Zerkleinerungsaggregat (Z_{H}1) zum Aufschluss der Schwergut-Fraktion (SG) und
- nachfolgend eine Dichtetrennungseinrichtung (D_{H}1) zur Abtrennung der Granulat-Fraktion (Granulat) und einer angereicherten, Nichteisen-Metall-haltigen Fraktion (NE_{H}) von der aufgeschlossenen Schwergut-Fraktion (SG) vorgesehen sind.

26. Anlage nach einem der Ansprüche 19 bis 25, **dadurch gekennzeichnet, dass** die Mittel zur Behandlung der Rohflusen-Fraktion (Ftusenᵣₒₕ) im Veredelungsprozess (V) zumindest eine Pralltellermühle (M_{V}), eine Absaugeinrichtung (AB_{V}) und eine Dichterennungseinrichtung (D_{V}) umfassen.

27. Anlage nach Anspruch 26, **dadurch gekennzeichnet, dass** Mittel zur Einspeisung der bei Abtrennung im Veredelungsprozess (V) anfallenden, Nichteisen-Metall-haltigen Fraktion (NE_{V}) in einen Aufbereitungsprozess der Nichteisen-Metall-haltigen Fraktion (NE) vorgesehen sind.

28. Verwendung des Verfahrens zur Aufbereitung von Flusen-Fraktionen aus Shredder-Rückständen metallhaltiger Abfälle, insbesondere von Fahrzeugkarossen, nach einem der Ansprüche 1 bis 18, **dadurch gekennzeichnet, dass** eine staub- und metallarme Flusen-Fraktion (Flusenᵣₑᵢₙ) für eine rohstoffliche oder energetische Verwertung, zum Beispiel in Klärschlamm-Verbrennungsanlagen, Zementwerken oder Hochöfen, separiert wird.

29. Verwendung nach Anspruch 28, **dadurch gekennzeichnet, dass** die Flusen-Fraktion (Flusenᵣₑᵢₙ) mindestens die ersten beiden der folgenden Charakteristika aufweist:
• einen Heizwert von > 20 MJ/kg
• einen Cl-Gehalt < 3,0 Gew.%
• einen Zn-Gehalt < 1,0 Gew.%
• einen Cu-Gehalt < 0,2 Gew.%
• einen Pb-Gehalt < 0,1 Gew.%

## Claims

1. Method for reprocessing shredder residues of metal-containing waste, especially vehicle bodies, in particular old vehicle bodies and/or vehicles which have been involved in an accident, in which the shredder residues are split into a shredder light fraction (SLF) and a non-ferromagnetic fraction (shredder, heavy fraction (SHF)),
**characterized in that**
(a) during the reprocessing of the shredder light fraction (SLF) and of the shredder heavy fraction (SHF) in preliminary processes (Pre_{L}, Pre_{H}), and of the material flows formed in the preliminary processes (Pre_{L}, Pre_{H}) at least in parts in a common main process (SR_{M}), a crude fluff fraction (fluff_{crude}) is produced by separation of at least a ferromagnetic fraction (Fe, V2A), a non-ferrous-metal-containing fraction (NF), a granulate fraction (granulate) and a sand fraction (sand), and
(b) the crude fluff fraction (fluff_{crude}) is split in a refining process (R).

2. Method according to Claim 1, **characterized in that** the crude fluff fraction (fluff_{crude}) is split into at least one, preferably at least two of the fractions of metal-containing dust fraction (NF_{dust}), low-metal fluff fraction (fluffₚᵤᵣₑ) and metal fraction (NF_{V}).

3. Method according to Claim 1 or 2, **characterized in that** the crude fluff fraction (fluff_{crude}) is split in at least one, in particular in at least two of the process steps of metal balling, dust removal and/or density separation, these process steps advantageously being carried out in the specified order.

4. Method according to one of the preceding claims, **characterized in that** the crude fluff fraction (fluff_{crude}) is separated at least from the shredder light fraction (SLF) and, in particular, only from the latter.

5. Method according to one of the preceding claims, **characterized in that** the shredder light fraction (SLF) is subjected to a further pre-treatment by means of a magnetic separator for the separation of ferromagnetic residual fractions.

6. Method according to one of the preceding claims, **characterized in that** in the preliminary process (Pre_{L}), starting from the shredder light fraction (SLF), by at least one, in particular at least two of the process steps, advantageously in the specified order, of crushing, metal separation, classification and density separation, at least one, advantageously at least two and, in particular, at least three of the fractions iron-containing or ferromagnetic fractions (Fe, V2A), fine-grained sand fraction (sand_{L}), crude fluff fraction (fluff_{crude}) and/or (coarse-) grained heavy material fraction (HM_{L}) is/are separated, preferably at least the lastmentioned fraction being obtained.

7. Method according to Claim 6, **characterized in that** from the shredder light fraction (SLF), in the preliminary process (Pre_{L}), a foamed plastic fraction (PU) is separated in particular by means of a suction device (SU_{L}).

8. Method according to Claim 6 or 7, **characterized in that**, in particular as a result of the crushing and/or classification, at least 60% by weight, in particular at least 80% by weight of the heavy material fraction (HM_{L}) is obtained with a diameter of from 4 to 10 mm.

9. Method according to one of the preceding claims, **characterized in that** at least one non-ferrous-metal-containing fraction (NF_{S}), fine-grained, low-metal sand fraction (sands), highly dense residual fraction (residual) and/or heavy material fraction (HM_{S}) are/is separated from the shredder heavy fraction (SHF) in the preliminary process (Pre_{S}) by at least one of the processes of metal deposition, classification and/or density separation, preferably at least two, in particular at least three of these fractions and particularly advantageously at least the lastmentioned fraction being obtained.

10. Method according to Claim 9, **characterized in that**, as a result of the classification, at least 60% by weight, in particular at least 80% by weight of the heavy material fraction (HM_{S}) is obtained with a diameter of > 6 mm.

11. Method according to one of Claims 6 to 10, **characterized in that** in the main process (SR_{M}) the heavy material fraction(s) (HM_{L}, HM_{H}) is/are disintegrated by means of a crushing unit (CR_{M}1) and are split by a density separator (DS_{H}1) into the granulate fraction (granulate_{M}) and/or into an enriched, non-ferrous-metal-containing fraction (NF_{M}).

12. Method according to Claim 11, **characterized in that** an output of the crushing unit (CR_{M}1) is predefined at < 8 mm.

13. Method according to one of the preceding claims, **characterized in that** the metal fractions (NF_{M}, NF_{H}) are combined into the common metal fraction (NF).

14. Method according to one of the preceding claims, **characterized in that** metal wires and cords are balled in the crude fluff fraction.

15. Method according to one of the preceding claims, **characterized in that** separation of heavy-metal-containing dusts takes place.

16. Method according to one of the preceding claims, **characterized in that** separation of balled metal wires and cords takes place.

17. Method according to one of the preceding claims, **characterized in that** the non-ferrous-metal-containing fraction (NF_{R}) obtained in the separation in the refining process (R) is integrated, according to quantity and composition, into a reprocessing process for the non-ferrous-metal-containing fraction (NF).

18. Method according to one of the preceding claims, **characterized in that** pelletization or briquetting of the fluff fraction (fluffₚᵤᵣₑ) takes place.

19. Plant for reprocessing shredder residues of metal-containing waste, especially vehicle bodies, consisting of a shredder light fraction (SLF) and a non-ferromagnetic fraction (shredder heavy fraction (SHF)), **characterized in that** means are present with which
(a) during the reprocessing of the shredder light fraction (SLF) and of the shredder heavy fraction (SHF) in preliminary processes (Pre_{L}, Pre_{H}), and of the material flows formed in the preliminary processes (Pre_{L}, Pre_{H}) at least in parts in a common main process (SR_{M}), a crude fluff fraction (fluff_{crude}) is produced by separation of at least a ferromagnetic fraction (Fe/V2A), a non-ferrous-metal-containing fraction (NF), a granulate fraction (granulate) and a sand fraction (sand), and
(b) the crude fluff fraction (fluff_{crude}) is split in a refining process (R)

20. Plant according to Claim 19, **characterized in that** there are means, with which the crude fluff fraction (fluff_{crude}) is split into a metal-containing dust fraction (NF_{dust}), a low-metal fluff fraction (fluffₚᵤᵣₑ) and the metal fraction (NF_{V}) in the refining process (R) by the process steps which follow one another of metal balling, dust removal and density separation.

21. Plant according to Claim 19 or 20, **characterized in that** a magnetic separator for separating ferromagnetic residual fractions from the shredder light fraction (SLF) is present.

22. Plant according to one of Claims 19 to 21, **characterized in that** for the reprocessing of the pretreated shredder light fraction (SLF) in the preliminary process (Pre_{L}) there are successively provided
- a first crushing unit (CR_{L}1) for the disintegration of the shredder light fraction (SLF),
- at least one magnetic separator (PM_{L}1) for separating at least one ferromagnetic fraction (Fe, V2A) from a non-ferromagnetic fraction (NF_{L}),
- a second crushing unit (CR_{L}2) for disintegrating the non-ferromagnetic fraction (NF_{L}),
- at least one classifier (CL_{L}1) for the separation of a fine-grained sand fraction (Sand_{L}) and
- at least one density separator (DS_{L}1) for splitting the remaining fraction into the crude fluff fraction (fluff_{crude}) and a coarse-grained heavy material fraction (HM_{L}).

23. Plant according to Claim 22, **characterized in that** a suction device (SU_{L}) for the separation of a foamed plastic fraction (PU) is additionally provided.

24. Plant according to one of Claims 19 to 23, **characterized in that** for the reprocessing of the shredder heavy fraction (SHF) in the preliminary process (Pre_{H}), there are successively provided a metal separator (MS_{H}1) and at least one classifier (CL_{H}1) for the separation of at least one enriched, non-ferrous-metal-containing fraction (NF_{H}), a heavy material fraction (HM_{H}) and a fine-grained, low-metal sand fraction (Sand_{H}).

25. Plant according to one of Claims 19 to 24, **characterized in that** for the reprocessing of the material flows from the preliminary processes (Pre_{L}, Pre_{H}) in the main process (SR_{M}) there are provided
- means for combining the heavy material fractions (HM_{L}, HM_{H}) into a common heavy material fraction (HM),
- a crushing unit (CR_{M}1) for the disintegration of the heavy material fraction (HM), and
- subsequently a density separator (DS_{M}1) for separating the granulate fraction (granulate) and an enriched, non-ferrous-metal-containing fraction (NF_{H}) from the disintegrated heavy material fraction (HM).

26. Plant according to one of Claims 19 to 25, **characterized in that** the means for treating the crude fluff fraction (fluff_{crude}) in the refining process (R) comprise at least one impact disc mill (M_{V}), one suction device (SD_{V}) and one density separation device (DSD_{V}).

27. Plant according to Claim 26, **characterized in that** means are provided for feeding the non-ferrous-metal-containing fraction (NF_{R}) obtained in the separation in the refining process (R) into a reprocessing process for the non-ferrous-metal-containing fraction (NF).

28. Use of the method for reprocessing fluff fractions from shredder residues of metal-containing waste, especially vehicle bodies, according to one of Claims 1 to 18, **characterized in that** a low-dust and low-metal fluff fraction (fluffₚᵤᵣₑ) is separated for raw-material or energy recycling, for example in clarification-sludge combustion plants, cement works or blast furnaces.

29. Use according to Claim 28, **characterized in that** the fluff fraction (fluffₚᵤᵣₑ) has at least the first two of the following characteristics:
• a heat value of > 20 MJ/kg
• a Cl content of < 3.0% by weight
• a Zn content of < 1.0% by weight
• a Cu content of < 0.2% by weight
• a Pb content of < 0.1% by weight.

## Revendications

1. Procédé de préparation de résidus de déchiquetage de déchets qui contiennent des métaux et en particulier les carrosseries de véhicule, notamment de vieilles automobiles et/ou d'automobiles accidentées, dans lequel les résidus de déchiquetage sont séparés en une fraction légère de déchiquetage (SLF) et une fraction non ferromagnétique (fraction lourde de déchiquetage (SSF)), **caractérisé en ce que**:
(a) pendant la préparation de la fraction légère de déchiquetage (SLF) et de la fraction lourde de déchiquetage (SSF) dans des opérations préalables (Vor_{L}, Vor_{S}) et des écoulements partiels qui sont produits dans les opérations préalables (Vor_{L}, Vor_{S}), on crée au moins par parties dans une opération principale commune (SR_{H}) une fraction de peluches brutes (peluches_{brutes}) par séparation d'au moins une fraction ferromagnétique (Fe,V2A), d'une fraction (NF) qui contient des métaux non ferreux, d'une fraction de granulés (granulés) et d'une fraction de sable (sable) et
(b) dans une opération d'affinage (V), la fraction de peluches brutes (peluches_{brutes}) est séparée.

2. Procédé selon la revendication 1, **caractérisé en ce que** la fraction de peluches brutes (peluches_{brutes}) est séparée en au moins une, en particulier en au moins deux des fractions suivantes, une fraction de poussières qui contiennent des métaux (NFₚₒᵤₛₛ), une fraction de peluches pauvre en métaux (peluchesₚᵤᵣ) et une fraction de métaux (NF_{V}).

3. Procédé selon la revendication 1 ou 2, **caractérisé en ce que** la fraction de peluches brutes (peluches_{brutes}) est séparée dans au moins une, en particulier au moins deux des étapes de processus de sphérisation des métaux, de dépoussiérage et/ou de séparation en fonction de la masse spécifique, ces étapes de procédé étant avantageusement mises en oeuvre dans la séquence indiquée.

4. Procédé selon l'une quelconque des revendications précédentes, **caractérisé en ce que** la fraction de peluches brutes (peluches_{brutes}) est au moins séparée à partir de la fraction légère de déchiquetage (SLF) et en particulier uniquement à partir de celle-ci.

5. Procédé selon l'une quelconque des revendications précédentes, **caractérisé en ce que** la fraction légère de déchiquetage (SLF) subit un pré-traitement supplémentaire au moyen d'un séparateur magnétique en vue de séparer les fractions ferromagnétiques résiduelles.

6. Procédé selon l'une quelconque des revendications précédentes, **caractérisé en ce que** dans l'opération préalable (Vor_{L}), partant de la fraction légère de déchiquetage (SLF), par au moins une, en particulier au moins deux des étapes de procédé, avantageusement dans la séquence indiquée, de déchiquetage, séparation des métaux, classification et séparation en fonction de la masse spécifique, on sépare au moins une, avantageusement au moins deux et en particulier au moins trois des fractions contenant du fer ou ferromagnétiques (Fe,V2A), de la fraction de sable fin (sable_{L}), de la fraction de peluches brutes (peluches_{brutes}) et/ou de la fraction de produits lourds à grains grossiers (SG_{L}), de préférence au moins la dernière fraction mentionnée étant obtenue.

7. Procédé selon la revendication 6, **caractérisé en ce qu'**à partir de la fraction légère de déchiquetage (SLF) dans l'opération préalable (Vor_{L}), on sépare de plus une fraction de mousse (PU) en particulier au moyen d'un dispositif d'aspiration (AB_{L}).

8. Procédé selon la revendication 6 ou 7, **caractérisé en ce qu'**en particulier par le déchiquetage et/ou la classification on obtient au moins 60% en poids, notamment au moins 80% en poids de la fraction (SG_{L}) de produits lourds avec un diamètre de 4 à 10 mm.

9. Procédé selon l'une quelconque des revendications précédentes, **caractérisé en ce qu'**à partir de la fraction lourde de déchiquetage (SSF), au cours de l'opération préalable (Vor_{S}) et par au moins l'un des processus de séparation des métaux, classification et/ou séparation en fonction de la masse spécifique, on sépare au moins une fraction (NF_{S}) qui contient des métaux non ferreux, une fraction de sable fin appauvri en métaux (sables), une fraction résiduelle à haute masse spécifique (rest) et/ou une fraction (SG_{S}) de produits lourds, de préférence au moins deux et notamment trois de ces fractions et en particulier avantageusement au moins la dernière fraction mentionnée étant obtenues.

10. Procédé selon la revendication 9, **caractérisé en ce que** l'on obtient par la classification au moins 60% en poids, notamment au moins 80% en poids de la fraction (SGₛ) de produits lourds avec un diamètre > 6 mm.

11. Procédé selon l'une quelconque des revendications 6 à 10, **caractérisé en ce que** dans l'opération principale (SR_{H}), la ou les fractions de produits lourds (SG_{L}, SGₛ) sont désagrégées au moyen d'une machine de déchiquetage (Z_{H}1) et sont séparées au moyen d'un dispositif (D_{H}1) de séparation en fonction de la masse spécifique en la fraction de granulés (granulés_{H}) et/ou en une fraction qui contient des métaux non ferreux (NF_{H}).

12. Procédé selon la revendication 11, **caractérisé en ce qu'**une décharge de la machine de déchiquetage (Z_{H}1) est prédéfinie de manière à être < 8 mm.

13. Procédé selon l'une quelconque des revendications précédentes, caractérïsé en ce que les fractions (NF_{H}, NF_{S}) qui contiennent des métaux sont rassemblées en une fraction métallifère commune (NF).

14. Procédé selon l'une quelconque des revendications précédentes, **caractérisé en ce que** l'on effectue une sphérisation de fils et de torons métalliques dans la fraction de peluches brutes.

15. Procédé selon l'une quelconque des revendications précédentes, **caractérisé en ce que** l'on effectue une séparation des poussières contenant des métaux lourds.

16. Procédé selon l'une quelconque des revendications précédentes, **caractérisé en ce que** l'on effectue une séparation des fils et torons métalliques sphérisés.

17. Procédé selon l'une quelconque des revendications précédentes, **caractérisé en ce que** la fraction (NF_{V}) qui contient des métaux non ferreux et qui est produite lors de la séparation au cours de l'opération d'affinage (V) est intégrée en fonction de sa quantité et de sa composition dans une opération de traitement de la fraction (NF) qui contient des métaux non ferreux.

18. Procédé selon l'une quelconque des revendications précédentes, **caractérisé en ce que** l'on effectue une granulation ou un briquetage de la fraction de peluches (peluchesₚᵤᵣ).

19. Installation de traitement de résidus de déchiquetage de déchets qui contiennent des métaux, en particulier de carrosseries de véhicule, constitués d'une fraction légère de déchiquetage (SLF) et d'une fraction non ferromagnétique (fraction lourde de déchiquetage (SSF)), **caractérisée en ce qu'**elle présente des moyens avec lesquels :
(a) pendant la préparation dé la fraction légère de déchiquetage (SLF) et de la fraction lourde de déchiquetage (SSF) dans des opérations préalables (Vor_{L}, Vor_{S}) et des écoulements, partiels qui sont produits dans les opérations préalables (Vor_{L}, Vor_{S}), on crée au moins par parties dans une opération principale commune (SR_{H}) une fraction de peluches brutes (peluches_{brutes}) par séparation d'au moins, une fraction ferromagnétique (Fe/V2A), d'une fraction (NF) qui contient des métaux non ferreux, d'une fraction de granulés (granulés) et d'une fraction de sable (sable) et
(b) dans une opération d'affinage (V), la fraction de peluches brutes (peluches_{brutes}) est séparée.

20. Installation selon la revendication 19, **caractérisée en ce que** des moyens sont prévus avec lesquels la fraction de peluches brutes (peluches_{brutes}) est séparée dans l'opération d'affinage (V) par les étapes de procédé successives de sphérisation des métaux, de dépoussiérage et de séparation en fonction de la masse spécifique dans une fraction de poussières (NFₚₒᵤₛₛ) contenant des métaux, une fraction de peluches pauvre en métaux (peluchesₚᵤᵣ) et la fraction métallique (NF_{V}).

21. Installation selon la revendication 19 ou 20, **caractérisée en ce qu'**un séparateur magnétique est prévu pour séparer des fractions résiduelles ferromagnétiques de la fraction légère de déchiquetage (SLF).

22. Installation selon l'une quelconque des revendications 19 à 21, **caractérisée en ce que** pour le traitement de la fraction légère de déchiquetage (SLF) prétraitée au cours de l'opération préalable (Vor_{L}), on prévoit successivement:
- une première machine de déchiquetage (Z_{L}1) qui décortique la fraction légère de déchiquetage (SLF),
- au moins un séparateur magnétique (PM_{L}1) qui sépare au moins une fraction ferromagnétique (Fe, V2A) d'une fraction non ferromagnétique (NF_{L}),
- une deuxième machine de déchiquetage (Z_{L}2) qui décortique la fraction non ferromagnétique (NF_{L}),
- au moins un dispositif de classification (K_{L}1) qui sépare une fraction de sable fin (sable_{L}) et
- au moins un dispositif (D_{L}1) de séparation en fonction de la masse spécifique qui sépare la fraction résiduelle en la, fraction de peluches brutes (peluches_{brutes}) et une fraction (SG_{L}) de produits lourds à grains grossiers.

23. Installation selon la revendication 22, **caractérisée en ce qu'**elle présente de plus un dispositif d'aspiration (AB_{L}) qui sépare une fraction de mousse (PU).

24. Installation selon l'une quelconque des revendications 19 à 23, **caractérisée en ce que** pour traiter la fraction lourde de déchiquetage (SSF) dans l'opération préalable (Vor_{S}), on prévoit successivement un séparateur de métaux (MA_{S}1) et au moins un dispositif de classification (K_{S}1) qui séparent au moins une fraction (NF_{S}) qui contient des en métaux non ferreux, une fraction (SG_{S}) de produits lourds et une fraction de sable fin appauvri en métaux (sables).

25. Installation selon l'une quelconque des revendications 19 à 24, **caractérisée en ce que** pour traiter les écoulements de matière qui proviennent des opérations préalables (Vor_{L}, Vor_{S}), on prévoit dans l'opération principale (SR_{H}):
- des moyens qui rassemblent les fractions (SG_{L}, SG_{S}) de produits lourds en une fraction commune (SG) de produits lourds,
- une machine de déchiquetage (Z_{H}1) qui décortique la fraction (SG) de produits lourds et ensuite
- un dispositif (D_{H}1) de séparation en fonction de la masse spécifique qui sépare la fraction des granulés (granulés) et une fraction (NF_{H}) qui contient des métaux non ferreux de la fraction décortiquée (SG) de produits lourds.

26. Installation selon l'une quelconque des revendications 19 à 25, **caractérisée en ce que** les moyens pour traiter la fraction de peluches brutes (peluches_{brutes}) dans l'opération d'affinage (V) comprennent au moins un microniseur à disques (M_{V}), un dispositif d'aspiration (AB_{V}) et un dispositif de séparation en fonction de la masse spécifique (D_{V}).

27. Installation selon la revendication 26, **caractérisée en ce qu'**elle présente des moyens d'entreposage de la fraction (NF_{V}) qui contient des métaux non ferreux et qui est produite lors de la séparation au cours de l'opération d'affinage (V) dans une opération de traitement de la fraction (NF) qui contient des métaux non ferreux.

28. Utilisation du procédé de traitement de fractions de peluches provenant de déchets métallifères de résidus de déchiquetage, en particulier de carrosseries de véhicule, selon l'une des revendications 1 à 18,
**caractérisée en ce que** l'on sépare une fraction de peluches pauvre en poussières et en métaux (peluchesₚᵤᵣ) pour l'utiliser comme matière première ou comme matière énergétique, par exemple dans des installations de combustion de boues de clarification, des cimenteries ou des hauts-fourneaux.

29. Utilisation selon la revendication 28, **caractérisée en ce que** la fraction de peluches (peluchesₚᵤᵣ) présente au moins les deux premières des caractéristiques suivantes:
- une valeur calorifique >,20 MJ/kg
- une teneur en Cl < 3,0% en poids,
- une teneur en Zn <1,0% en poids,
- une teneur en Cu < 0,2% en poids et
- une teneur en Pb < 0,1% en poids.
